# EUROPEAN PATENT APPLICATION

(11) **EP 4 407 707 A1**
(43) Date of publication of application: **31.07.2024**
(21) Application number: 23816337.2
(22) Date of filing: 30.05.2023
(51) Int. Cl.: H01M 4/131, H01M 4/04, H01M 4/1391, H01M 4/36, H01M 4/525, H01M 4/505, H01M 4/62, H01M 10/0562, H01M 4/02

(54) **POSITIVE ELECTRODE FOR ALL-SOLID-STATE BATTERY, METHOD FOR MANUFACTURING SAME, AND ALL-SOLID-STATE BATTERY COMPRISING POSITIVE ELECTRODE**

(30) Priority: 31.05.2022 KR 20220067157
(71) Applicant: LG Energy Solution, Ltd., Seoul 07335 (KR)
(72) Inventor: KIM, Sohee, Daejeon 34122 (KR); KWON, Hyejin, Daejeon 34122 (KR); KIM, Jeonggil, Daejeon 34122 (KR); KIM, Taegon, Daejeon 34122 (KR); HAH, Hoejin, Daejeon 34122 (KR); KIM, Ki Tae, Daejeon 34122 (KR); LEE, Choonghyeon, Daejeon 34122 (KR); KIM, Myeongsoo, Daejeon 34122 (KR)
(74) Representative: Goddar, Heinz J.
(86) International application number: PCT/KR2023/007387
(87) International publication number: WO 2023/234676

(57) **Abstract**

Disclosed are a cathode for an all-solid-state battery in which a granule layer is composed of multiple layers having different types of particles to provide a uniform surface flatness during sheeting of the granule powder while increasing electrical conductivity of granule powder, resulting in excellent adhesion to the solid electrolyte, a method of preparing the same, and an all-solid-state battery including the cathode. The cathode for an all-solid-state battery includes: a metal current collector; an inner granule powder layer that is located on one surface of the metal current collector and includes an active material, a conductive material, and a binder in a form of granule powder; and an outer granule powder layer that is stacked on a surface of the inner granule powder layer and includes the active material, the conductive material, and the binder in the form of the granule powder, in which the conductive material included in the inner granule powder layer and the conductive material included in the outer granule powder layer have different shapes from each other.

## Description

### [Technical Field]

This application claims the benefit of priority based on Korean Patent Application No. 10-2022-0067157 filed on May 31, 2022, the entire contents of which are incorporated herein as part of this specification.

The present invention relates to a cathode for an all-solid-state battery including granule powder made of an active material, a conductive material, and a binder, a method of preparing the same, and an all-solid-state battery including the cathode, and more particularly, to a cathode for an all-solid-state battery in which a granule layer is composed of multiple layers having different types of particles to provide a uniform surface flatness during sheeting of granule powder while increasing electrical conductivity of the granule powder, resulting in excellent adhesion to the solid electrolyte, a method of preparing the same, and an all-solid-state battery including the cathode.

### [Background Art]

Various batteries that may overcome the limitations of currently widely commercialized lithium secondary batteries are being studied in terms of capacity, safety, output, large size, and miniaturization of batteries. Typically, compared to lithium secondary batteries, a metal-air battery with very large theoretical capacity in terms of capacity, an all-solid-state battery with no risk of explosion in terms of safety, a supercapacitor in terms of output, a sodium-sulfur battery (NaS battery) or a redox flow battery (RFB) in terms of large size, a thin film battery in terms of miniaturization, and the like are continuously being researched in academia and industry.

Among them, the all-solid-state battery refers to a battery in which a liquid electrolyte used in a lithium secondary battery is replaced with a solid one. Accordingly, the all-solid-state battery does not use a flammable solvent and thus does not cause ignition or explosion due to the decomposition reaction of the conventional electrolyte solution, thereby greatly improving safety. In addition, since the all-solid-state battery may use Li metal or Li alloy as an anode material, the all-solid-state battery has the advantage of dramatically improving an energy density relative to a mass and volume of a battery.

Meanwhile, the solid electrolyte of the all-solid-state battery may be largely classified into organic-based (polymer-based) solid electrolytes and inorganic-based solid electrolytes. Among them, the inorganic-based solid electrolytes may be divided into sulfide-based and oxide-based solid electrolytes. In addition, the most technologically developed solid electrolyte so far is the sulfide-based solid electrolyte, which has been developed to the extent that ionic conductivity of the sulfide-based solid electrolyte reaches a level close to that of an organic electrolyte solution. As such, the sulfide-based solid electrolyte may not only have high ionic conductivity of 10⁻³ to 10⁻² S/cm among the solid electrolytes, but also have the advantage of being ductile and in good contact with an interface, which has an advantage of improving resistance.

However, since the sulfide-based solid electrolyte is sensitive to moisture, such as generating H₂S gas when being in contact with moisture, it is necessary to build a very dry environment when preparing batteries or electrodes. For this reason, the all-solid-state battery using the sulfide-based solid electrolyte relies on a dry electrode method, and can realize a high loading electrode compared to a wet electrode method. In addition, the dry electrode method may be largely classified into a PTFE fiberization method and a granule powder sheeting method using a spray drying method. Among them, since the granule powder sheeting method may directly sheet granule powder with excellent sphericity, it may be advantageous in preparing a uniform loading electrode compared to the PTFE fiberization method.

Regarding the "granule powder sheeting method used in the spray drying method," the granule powder means particles made of an active material, a conductive material, and a binder. In the above method, an electrode may be prepared by stacking granule powder on an electrode current collector and then applying heat and pressure to the granule powder to sheet the granule powder. In addition, the all-solid-state battery may be prepared by attaching solid electrolytes to electrodes prepared in this way and in environment.

Meanwhile, when a conductive material is applied as a single-walled carbon nanotube (SWCNT), which is a linear conductive material, among the granule powders included in the electrode of the existing all-solid-state battery, there is an advantage of improving electrical conductivity and improving a migration phenomenon of conductive materials. However, when the conductive material included in the granule powder is applied as the single-walled carbon nanotube, which is the linear conductive material, since it is disadvantageous to form a uniform surface during the sheeting of the granule powder (that is, non-uniform surface leveling), the problem of incomplete adhesion with the solid electrolyte in contact with the electrode inevitably occurs. In other words, the single-walled carbon nanotube, which is the linear conductive material, is good in terms of battery performance in terms of exhibiting excellent electrical conductivity, but has a fatal disadvantage (problem of incomplete adhesion with the solid electrolyte) in preparing electrodes or batteries.

On the other hand, among the granule powders included in the electrode of the existing all-solid-state battery, the conductive material is sometimes applied as a point-shaped conductive material such as carbon black (CB). In this case, it is possible to form a uniform surface during the sheeting of the granule powder. However, when the conductive material included in the granule powder is applied as the point-shaped conductive material, there is the problem in that the point-type conductive material migrates (a phenomenon that moves to an outer side of granule powder due to a difference in density) during the drying process after preparing the granule powder.

That is, both when the conductive material included in the granule powder of the electrode is applied as the linear conductive material and when the conductive material included in the granule powder of the electrode is applied as the point-shaped conductive material, there is no choice but to be in a so-called trade-off relationship. Therefore, by showing only the advantages of applying the conductive material included in the granule powder of the electrode as the linear conductive material and the point-shape conductive material, there is a need for a method of improving the performance of the battery while facilitating the preparation of the electrodes and batteries.

### [Disclosure]

### [Technical Problem]

Accordingly, it is an object of the present invention to provide a cathode for an all-solid-state battery in which a granule layer is composed of multiple layers having different shapes of particles to provide a uniform surface flatness during sheeting of granule powder while increasing electrical conductivity of the granule powder, resulting in excellent adhesion to the solid electrolyte, a method of preparing the same, and an all-solid-state battery including the cathode.

### [Technical Solution]

To achieve the above object, the present invention provides a cathode for an all-solid-state battery including: a metal current collector; an inner granule powder layer that is located on one surface of the metal current collector and includes an active material, a conductive material, and a binder in a form of granule powder; and an outer granule powder layer that is stacked on a surface of the inner granule powder layer and includes the active material, the conductive material, and the binder in the form of the granule powder, in which the conductive material included in the inner granule powder layer and the conductive material included in the outer granule powder layer have different shapes from each other.

In addition, the present invention provides a method of preparing a cathode for an all-solid-state battery including the steps of: forming an inner granule powder layer in a form of a sheet by preparing an inner granule powder including an active material, a linear conductive material, and a binder in a form of granule powder, applying the prepared inner granule power on a cathode metal current collector, and then rolling the cathode metal current collector; and forming an outer granule powder layer in the form of the sheet by preparing the outer granule powder including the active material, the point-shaped conductive material, and the binder in the form of the granule powder, applying the outer granule powder to the surface of the prepared inner granule powder layer, and then rolling the prepared inner granule powder layer, wherein the conductive material included in the inner granule powder layer and the conductive material included in the outer granule powder layer have different shapes from each other.

In addition, the present invention provides an all-solid-state battery including: the cathode for an all-solid-state battery; an anode; and a solid electrolyte.

### [Advantageous Effects]

According to a cathode for an all-solid-state battery, a method of preparing the same, and an all-solid-state battery including the cathode according to the present invention, a granule layer is composed of multiple layers having different shapes of particles to provide a uniform surface flatness during sheeting of granule powder while increasing electrical conductivity of the granule powder, resulting in excellent adhesion to the solid electrolyte.

### [Brief Description of the Drawings]

FIG. 1 is a schematic cross-sectional side view of a cathode for an all-solid-state battery according to an embodiment of the present invention.
FIG. 2 is a schematic cross-sectional side view illustrating that a surface of a cathode is flattened by a point-shaped conductive material of an outer granule powder layer, in the cathode for an all-solid-state battery according to an embodiment of the present invention.
FIG. 3 is an image of a surface of granule powder including the point-shaped conductive material observed with a scanning electron microscope.
FIG 4 is an image of a surface of granule powder including a linear conductive material observed with a scanning electron microscope.

### [Best Mode]

Hereinafter, the present invention will be described in detail.

According to the present invention, a cathode for an all-solid-state battery includes: a metal current collector; an inner granule powder layer that is located on one surface of the metal current collector and includes an active material, a conductive material, and a binder in a form of granule powder; and an outer granule powder layer that is stacked on a surface of the inner granule powder layer and includes the active material, the conductive material, and the binder in the form of the granule powder, in which the conductive material included in the inner granule powder layer and the conductive material included in the outer granule powder layer have different shapes from each other.

Generally, an all-solid-state battery using a sulfide-based solid electrolyte relies on a dry electrode method that can realize a high loading electrode compared to a wet electrode method. In addition, as the dry electrode method, a "granule powder sheeting method using a spray drying method," which has advantages over a PTFE fiberization method, is mainly used. Here, the granule powder means particles made of an active material, a conductive material, and a binder, and in the above method, an electrode may be prepared by stacking (or loading) granule powder on an electrode current collector and then applying heat and pressure to the granule powder to form the granule powder in the form of the sheet. In addition, the all-solid-state battery may be prepared by attaching solid electrolytes to electrodes prepared in this way and in environment.

Meanwhile, when a conductive material is applied as a single-walled carbon nanotube (SWCNT), which is a linear conductive material, among the granule powders included in the electrode of the existing all-solid-state battery, there is an advantage of improving electrical conductivity and improving migration phenomenon of conductive materials. However, when the conductive material included in the granule powder is applied as the single-walled carbon nanotube, which is the linear conductive material, since it is disadvantageous to form a uniform surface during the sheeting of the granule powder (that is, non-uniform surface leveling), the problem of incomplete adhesion with the solid electrolyte in contact with the electrode inevitably occurs. In other words, the single-walled carbon nanotube, which is the linear conductive material, is good in terms of battery performance in terms of exhibiting excellent electrical conductivity, but has a fatal disadvantage (problem of incomplete adhesion with the solid electrolyte) in preparing electrodes or batteries.

On the other hand, among the granule powders included in the electrode of the existing all-solid-state battery, the conductive material is sometimes applied as a point-shaped conductive material such as carbon black (CB). In this case, it is possible to form a uniform surface during the sheeting of the granule powder. However, when the conductive material included in the granule powder is applied as the point-shaped conductive material, there is the problem in that the point-type conductive material migrates (a phenomenon that moves to an outer side of granule powder due to a difference in density) during the drying process after preparing the granule powder.

That is, both when the conductive material included in the granule powder of the electrode is applied as the linear conductive material and when the conductive material included in the granule powder of the electrode is applied as the point-shaped conductive material, there is no choice but to be in a so-called trade-off relationship. Accordingly, the present applicant shows only the advantages of applying the conductive material included in the granule powder of the electrode as the linear conductive material and the advantage of applying the conductive material as the point-shaped conductive material (that is, by applying both the linear conductive material and the point-shaped conductive material as the conductive material included in the granule powder of the electrode), thereby improving performance of a battery while facilitating the preparation of an electrode and a battery.

Hereinafter, the present invention will be described in more detail.

The granule powder included in the cathode for all-solid-state battery is a particle including an active material, a conductive material, and a binder, and may have a spherical shape when viewed as a whole. That is, here, the spherical shape does not mean a perfect spherical shape in a strict sense, and is generally used as a comprehensive concept including round-shaped particles. In addition, the active material, which is a fine particle in the form of a powder, is combined with a conductive material by a binder solution to grow into a particle having a specific range of specifications.

According to an embodiment of the present invention, the granule powder is a spherical particle having an average diameter of 30 to 150 µm. Here, since the spherical particle does not mean a perfect spherical particle as described above, the diameter means the largest value among distances from one point on a particle surface to another point. Specifically, the average diameter of the granule powder may be 30 µm or more, 35 µm or more, 40 µm or more, 45 µm or more, or 50 µm or more, and 150 µm or less, 145 µm or less, 140 µm or less, 135 µm or less, or 130 µm or less, 125 µm or less, or 120 µm or less. When the average diameter of the granule powder is less than 30 µm, since a gap in the granule powder layer decreases, a sulfide-based solid electrolyte penetrates between the granule powders to reduce a coated amount, so the performance of the battery may not be significantly improved, and when the average diameter of the granule powder exceeds 150 µm, a distance between a surface contacting the sulfide-based solid electrolyte and a center of the granule powder increases, so the performance of the battery may not be significantly improved.

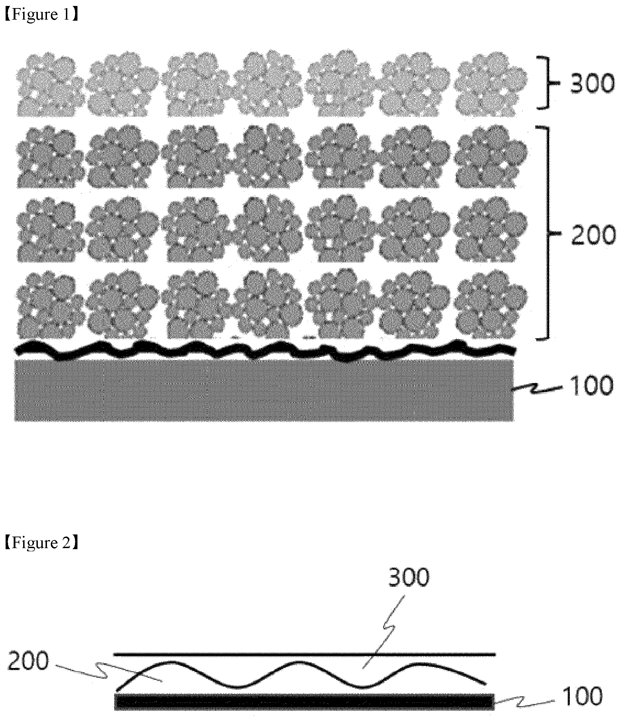

FIG. 1 is a schematic cross-sectional side view of a cathode for an all-solid-state battery according to an embodiment of the present invention. The greatest feature of the present invention is that the granule powder layer located on one side of the cathode metal current collector is composed of multiple layers. Preferably, as shown in FIG. 1, two granule powder layers, that is, an inner granule powder layer 200 and an outer granule powder layer 300, may be sequentially stacked on one surface of the cathode metal current collector 100.

In addition, the conductive material included in the inner granule powder layer 200 and the conductive material included in the outer granule powder layer 300 are different from each other. Preferably, the conductive material included in the inner granule powder layer 200 and the conductive material included in the outer granule powder layer 300 may have different shapes from each other. More preferably, the conductive material included in the inner granule powder layer 200 and the conductive material included in the outer granule powder layer 300 may have different shapes and types from each other.

First, the conductive material included in the inner granule powder layer 200 located to face one surface of the cathode metal current collector 100 includes linear particles. In addition, the conductive material included in the outer granule powder layer 300 stacked on a surface side of the inner granule powder layer 200 (opposite surface of the inner granule powder layer 200 that does not come into contact with the cathode metal current collector 100) includes point-shaped particles. In this way, when the conductive material (i.e., linear conductive material) including the linear particles is included in the inner granule powder layer 200, and at the same time the conductive material (i.e., point-shaped conductive material) including the point-shaped particles is included in the outer granule powder layer 300, only the advantage of applying the conductive material included in the granule powder as the linear conductive material and the advantage of applying the point-shaped conductive material may be expressed, so it is possible to improve the performance of the battery while facilitating the preparation of the electrode and battery.

More specifically, the linear conductive material included in the inner granule powder layer 200 is a carbon nanotube made of linear particles, and is preferably a single-walled carbon nano tube (SWCNT) made of linear particles. In the case of the single-walled carbon nanotube, there is an advantage in that electrical conductivity is improved and a migration phenomenon of the conductive material is improved. On the other hand, since the formation of a uniform surface is disadvantageous when the granule powder is sheeted on the cathode current collector (i.e., non-uniform surface leveling), there is a problem in that adhesion with a solid electrolyte that comes into contact with the electrode is incomplete.

However, in the present invention, since a separate outer granule powder layer 300 including a point-shaped conductive material is stacked on the inner granule powder layer 200 including the linear conductive material, the uniform surface can be formed, and thus it is possible to dramatically improve the adhesion with the solid electrolyte that comes into contact with the electrode. That is, this is because the granule powders of the outer granule powder layer 300 including the point-shaped conductive material are impregnated in a gap between the granule powders of the inner granule powder layer 200 including the linear conductive material, and the granule powders of the outer granule powder layer 300 including the point-shaped conductive material are additionally uniformly located thereon to flatten the surface of the cathode.

FIG. 2 is a schematic cross-sectional side view illustrating that the surface of the cathode is flattened by the point-shaped conductive material of the outer granule powder layer in the cathode for an all-solid-state battery according to an embodiment of the present invention, through which it may be schematically seen that the granule powders of the outer granule powder layer 300 including the point-shaped conductive material are impregnated in the gap between the granule powders of the inner granule powder layer 200 including the linear conductive material, and the granule powders of the outer granule powder layer 300 including the point-shaped conductive material are additionally uniformly located thereon to flatten the surface of the cathode. In addition, carbon black (CB) may be exemplified as such a point-shaped conductive material (i.e., as a conductive material made of point-shaped particles). In addition to this, any material similar to or identical to the shape and physical properties of carbon black particles may be applied as the point-shaped conductive material of the present invention.

Meanwhile, a thickness ratio between the inner granule powder layer 200 and the outer granule powder layer 300 may be 4: 1 to 8: 1. In this case, a thickness of the inner granule powder layer 200 means a thickness of a part where a thickness from a contact point with the cathode metal current collector 100 to a contact point with the outer granule powder layer 300 is thickest, and a thickness of the outer granule powder layer 300 means a thickness of a part where a thickness from the surface of the cathode (in other words, the surface of the outer granule powder layer that does not come into contact with the inner granule powder layer) to a contact point with the inner granule powder layer 200 is thinnest. In addition, there is no particular limitation on the total thickness of the granule powder layers 200 and 300, which are the combination of the inner granule powder layer 200 and the outer granule powder layer 300, and the granule powder layers 200 and 300 may have different thicknesses depending on the use of the battery or the like. However, taking a general all-solid-state battery as an example, the thicknesses of all the granule powder layers 200 and 300 at this time may be 50 to 400 µm. Here, the thickness of the inner granule powder layer 200 may be 40 to 240 µm, and the thickness of the outer granule powder layer 300 may be 10 to 60 µm.

Here, a preferable linear conductive material included in the inner granule powder layer 200, that is, a single-walled carbon nanotube will be described in more detail. Since the single-walled carbon nanotube has a structure that is advantageous in contacting the active material even with a lower weight than a multi-walled carbon nanotube, the single-walled carbon nanotube is advantageous in improving the performance of the battery. In addition, the single-walled carbon nanotube may have a monomolecular fibrous structure. Moreover, the diameter of the single-walled carbon nanotube may be 1 to 10 nm. Here, the diameter means the largest value among distances from any one point of an outermost portion to any other point based on a circular cross-section of the single-walled carbon nanotube.

Specifically, the diameter of the single-walled carbon nanotube may be 1 nm or more, 2 nm or more, or 3 nm or more, and may be 10 nm or less, 9 nm or less, or 8 nm or less. When the diameter of the single-walled carbon nanotube is less than 1 nm, since an outer area of the single-walled carbon nanotube is small, it is difficult to form an effective structure between active materials, such as reducing the contact area with the active materials, so the degree of improvement in the performance of the battery may be insignificant. In addition, when the diameter of the single-walled carbon nanotube exceeds 10 nm, it is difficult to densely connect between the active materials, so a large amount of active materials compared to an input weight of the single-walled carbon nanotube may not be systematically covered, thereby making the degree of improvement in performance of the battery insignificant.

In addition, the single-walled carbon nanotube may have a BET specific surface area of 400 to 1,000 m²/g. The BET specific surface area is a specific surface area measured by a BET method, and specifically, it is preferable to calculate a nitrogen gas adsorption amount under liquid nitrogen temperature (77K) using BEL Japan company's BELSORP-mini II. Specifically, the BET specific surface area of the single-walled carbon nanotube may be 400 m²/g or more, 450 m²/g or more, and 500 m²/g or more, and may be 1,000 m²/g or less, 950 m²/g or less, 900 m²/g or less, 850 m²/g or less, 800 m²/g or less, 750 m²/g or less, or 700 m²/g or less. When the BET specific surface area of the single-walled carbon nanotube is less than 400 m²/g, the contact area with the active material relative to the weight of the single-walled carbon nanotube is reduced, and thus, the improvement in performance of the battery may be insignificant. In addition, when the BET specific surface area of the single-walled carbon nanotube exceeds 1,000 m²/g, it is not possible to easily contact the active materials or solid electrolytes as much as the exceeding specific surface area, so the performance of the battery may not be significantly improved.

As described above, the cathode for an all-solid-state battery according to the present invention includes the inner granule powder layer 200 and the outer granule powder layer 300, and each of the inner granule powder layer 200 and the outer granule powder layer 300 includes the active material, the conductive material, and the binder in the form of the granule powder. Among them, any active material that can be used as a cathode active material for a lithium ion secondary battery may be used without limitation. The active material included in the inner granule powder layer 200 and the active material included in the outer granule powder layer 300 may be a lithium transition metal oxide including one or more transition metals. Examples of the active material included in the inner granule powder layer 200 and the active material included in the outer granule powder layer 300 may include one selected independently of each other from the group consisting of LiCoOz, LiNiOz, LiMnOz, Li₂MnO₃, LiMn₂O₄, Li(NiₐCo_{b}Mn_{c})O₂ (0<a<1, 0<b<1, 0<c<1, a+b+c=1), LiNi_{1-y}Co_{y}O₂(O<y<1), LiCo_{1-y}Mn_{y}O₂, LiNi_{1-y}Mn_{y}O₂ (O<y<1), Li(NiₐCo_{b}Mn_{c})O₄ (0<a<2, 0<b<2, 0<c<2, a+b+c=2), LiMn_{2-z}Ni_{z}O₄ (0<z<2), LiMn_{2-z}Co_{z}O₄ (0<z<2), and combinations thereof.

In addition, the binder is mixed with an active material and a conductive material, which are fine particles in a powder state, and binds each component to help the growth of particles. Since sulfide-based solid electrolytes are sensitive to moisture, such as generating H₂S gas when being in contact with moisture, it is preferable to exclude moisture as much as possible from the time of forming granule powders. The binder included in the inner granule powder layer 200 and the binder included in the outer granule powder layer 300 may be organic-based binders, and the organic-based binder means a binder that is dissolved or dispersed in an organic solvent, particularly N-methylpyrrolidone (NMP), and is distinguished from an aqueous binder that uses water as a solvent or dispersion medium. For example, the binder included in the inner granule powder layer 200 and the binder included in the outer granule powder layer 300 may be selected independently of each other from the group consisting of polyvinylidene fluoride (PVDF), vinylidenefluoride-hexafluoropropylene copolymer (PVDF-co-HFP), polyvinyl alcohol, starch, hydroxypropyl cellulose, regenerated cellulose, polyvinylpyrrolidone, polyimide, polyamideimide, polyethylene, polypropylene, ethylene-propylene-diene monomer (EPDM), sulfonated EPDM, styrene butyrene rubber, and fluorine rubber, but is not limited thereto.

In addition, each of the inner granule powder layer 200 and the outer granule powder layer 300 may include the active material, the conductive material, and the binder as follows. That is, each of the inner granule powder layer 200 and the outer granule powder layer 300 may include an active material of 85 to 99.8% by weight, preferably 88 to 99.5% by weight, and more preferably 90 to 99.3% by weight, a binder of 0.1 to 10% by weight, preferably 0.2 to 8% by weight, and more preferably 0.3 to 7% by weight, and a conductive material of 0.1 to 10% by weight, preferably 0.2 to 8% by weight, and more preferably 0.3 to 7% by weight.

The granule powder constituting each of the inner granule powder layer 200 and the outer granule powder layer 300 may have a gap ratio of 10 to 40%. The gap ratio of the granule powder means a volume ratio of the gap in the granule powder, and the gap ratio may be measured, for example, by a Brunauer-Emmett-Teller (BET) measurement method or a mercury porosimeter (Hg porosimeter), but is not limited thereto. Specifically, the gap ratio of the granule powder may be 10% or more, 15% or more, 20% or more, or 25% or more, and may be 40% or less, 35% or less, or 30% or less. When the gap ratio of the granule powder is less than 10%, it is difficult for the sulfide-based solid electrolyte to come into close contact with the granule powder, so the degree of improvement in performance of the battery may be insignificant. In addition, when the gap ratio of the granule powder exceeds 40%, the amount of active material is reduced compared to the volume of the granule powder, making it difficult to provide a high-loading electrode. As a result, the performance of the battery may not be significantly improved.

Meanwhile, the granule powder included in the cathode for an all-solid-state battery according to the present invention, that is, the granule powder included in the inner granule powder layer 200 and the granule powder included in the outer granule powder layer 300 may be a granule power in which a solid electrolyte is coated on at least part or all of the surface. In addition, the solid electrolyte may also be impregnated and located even in the gap between the granule powders included in the cathode for an all-solid-state battery. That is, the cathode for an all-solid-state battery further includes: a solid electrolyte that is coated and located on the surfaces of the granule powder included in the inner granule powder layer 200 and the granule powder included in the outer granule powder layer 300; and a solid electrolyte that is impregnated and located between the granule powders.

The solid electrolyte may include at least one selected from a sulfide-based solid electrolyte, a polymer-based solid electrolyte, and an oxide-based solid electrolyte, and may preferably include only the sulfide-based solid electrolyte. In addition, the sulfide-based solid electrolyte is a liquid phase in which the solid sulfide-based electrolyte is dissolved, and may be located in the granule powder included in the inner granule powder layer 200, the granule powder included in the outer granule powder layer 300, and impregnated between these granule powders and then cured through drying, so the sulfide-based solid electrolyte may be coated on the surfaces of the granule powders and located between the granule powders.

The sulfide-based solid electrolyte may include a lithium salt, and the lithium salt may be expressed as Li⁺X⁻ as an ionizable lithium salt. An anion of the lithium salt is not particularly limited, but examples of the anion of the lithium salt may include F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N; CF₃CF₂(CF₃)₂CO⁻, (CF₃SO₂)₂CH⁻, (SF₅)₃C⁻, (CF₃SO_{z})₃C⁻, CF₃(CF₂)₇SO₃⁻, CF₃CO₂⁻, CH₃CO₂⁻, SCN⁻, and (CF₃CF₂SO₂)₂N⁻.

In addition, the sulfide-based solid electrolyte contains sulfur (S) and has ionic conductivity of metal belonging to group 1 or group 2 of the periodic table, and may include Li-P-S-based glass or Li-P-S-based glass ceramics. Non-limiting examples of the sulfide-based solid electrolyte may include Li₂S-P₂S₅, Li₂S-LiI-P₂S₅, Li₂S-LiI-Li₂O-P₂S₅, Li₂S-LiBr-P₂S₅, Li₂S-LiCl-P₂S₅, Li₂S-Li₂O-P₂S₅, Li₂S-Li₃PO₄-P₂S₅, Li₂S-P₂S₅-P₂O₅, Li₂S-P₂S₅-SiS₂, Li₂S-P₂S₅-SnS, Li₂S-P₂S₅-Al₂S₃, Li₂S-GeS₂, Li₂S-GeS₂-ZnS, and the like, and the sulfide-based solid electrolyte may include any one or more thereof.

When the sulfide-based solid electrolyte is coated on the granule powder of the cathode for an all-solid-state battery, the sulfide-based solid electrolyte may be included in an amount of 20 to 40 parts by weight based on 100 parts by weight of the total content of the granule powder. When the sulfide-based solid electrolyte is included in an amount exceeding 40 parts by weight based on 100 parts by weight of the total content of the granule powder, the loading amount of the cathode active material is relatively reduced, which may rather adversely affect the improvement in performance of the battery.

Next, a method of preparing a cathode for an all-solid-state battery according to the present invention will be described. The method of preparing a cathode for an all-solid-state battery includes: forming the inner granule powder layer 200 in a form of a sheet by preparing an inner granule powder including an active material, a linear conductive material, and a binder in a form of granule powder, applying the prepared inner granule power on the cathode metal current collector 100, and then rolling the cathode metal current collector 100 and the inner granule power applied thereon; and forming the outer granule powder layer 300 in the form of the sheet by preparing the outer granule powder including the active material, the point-shaped conductive material, and the binder in the form of the granule powder, applying the outer granule powder to the surface of the prepared inner granule powder layer 200, and then rolling the prepared inner granule powder layer 200, in which the conductive material included in the inner granule powder layer 200 and the conductive material included in the outer granule powder layer 300 have different shapes from each other. In addition, the method of preparing a cathode for an all-solid-state battery further includes injecting and drying the sulfide-based electrolyte into the inner granule powder layer 200, the outer granule powder layer 300, and between the inner granule powder layer 200 and the outer granule powder layer 300, if necessary. In this way, the cured sulfide-based solid electrolyte is coated on the surface of the granule powder and impregnated between the granule powders.

In addition, the all-solid-state battery according to the present invention will be described. The all-solid-state battery includes the cathode for an all-solid-state battery, the anode, and the solid electrolyte described above. In addition, the solid electrolyte may be located between the surface of the granule powder included in the cathode for an all-solid-state battery and between the granule powders, respectively (that is, the solid electrolyte may be included in the cathode). In addition, the solid electrolyte may be located as a layered film between the cathode and the anode in addition to being included in the cathode. Such a solid electrolyte layer may play the same role as a separator in a general lithium secondary battery (i.e., a role of passing through lithium ion while electrically insulating the anode and the cathode). The solid electrolyte may be preferably the sulfide-based solid electrolyte. Meanwhile, the all-solid-state battery may be used as a semi-solid battery including a liquid electrolyte, if necessary, and in this case, a separate polymer separator may be further required.

Meanwhile, the anode may include an anode active material usable for the lithium ion secondary battery. For example, the anode active material may include any one or more selected from carbons such as non-graphitizing carbon and graphite-based carbon; metal composite oxides such as LiₓFe₂O₃ (0 ≤ x ≤ 1), LiₓWO₂ (0 ≤ x ≤ 1), and SnₓMe₁₋ₓMe'_{y}O_{z} (Me: Mn, Fe, Pb, Ge; Me': Al, B, P, Si, Group 1, Group 2, and Group 3 elements of the periodic table, halogens; 0 < x ≤1; 1 ≤ y ≤3; 1 ≤ z ≤ 8); lithium metal; lithium alloy; silicon-based alloys; tin-based alloys; metal oxides such as SnO, SnOz, PbO, PbOz, Pb₂O₃, Pb₃O₄, Sb₂O₃, Sb₂O₄, Sb₂O₅, GeO, GeOz, Bi₂O₃, Bi₂O₄, and BizOs; conductive polymers such as polyacetylene; Li-Co-Ni-based materials; titanium oxide; lithium titanium oxide, etc.

In addition, the present invention provides a battery module including the all-solid-state battery as a unit cell, a battery pack including the battery module, and a device including the battery pack as a power source. Specific examples of the device may include a power tool powered by an electric motor; electric vehicles such as an electric vehicle (EV), a hybrid electric vehicle (HEV), and a plug-in hybrid electric vehicle (PHEV); electric two-wheeled vehicles including an electric bicycle (E-bike) and an electric scooter (E-scooter); an electric golf cart; and a system for power storage; and the like, but is not limited thereto.

Hereinafter, in order to assist in the understanding of the present invention, the preferred Example is presented, but it will be obvious to those skilled in the art that the Example is intended only to illustrate the present invention, and various modifications and alterations may be made within the scope and technical idea of the present invention, and it is also natural that such modifications and alterations fall within the scope of the appended claims.

### [Example 1] Preparation of cathode for all-solid-state battery

First, under N-methylpyrrolidone solvent conditions, after a slurry prepared by mixing LiNi_{0.6}Co_{0.2}Mn_{0.2}O₂ (NCM 622) as an active material, a linear single-walled carbon nanotube (diameter: about 5 nm and BET specific surface area: about 600 m²/g) as a conductive material, and polyvinylidene fluoride (PVDF) as a binder in a weight ratio of 94: 3: 3 is spray-dried to prepare inner granule powder (gap rate: 30%) having an average diameter of about 60 µm, the prepared inner granule powder was applied to one surface of an aluminum current collector having a thickness of about 20 µm to form the inner granule powder layer having a thickness of about 240 µm and then roll the inner granule powder layer.

Next, under the N-methylpyrrolidone solvent conditions, after a slurry prepared by mixing LiNi_{0.6}Co_{0.2}Mn_{0.2}O₂ (NCM 622) as an active material, point-shaped carbon black (primary particle diameter: about 35 nm and BET specific surface area: about 65 m²/g) as a conductive material, and polyvinylidene fluoride (PVDF) as a binder in a weight ratio of 94 : 3 : 3 is spray-dried to prepare outer granule powder (gap rate 30 %) having an average diameter of about 60 µm, the prepared outer granule powder was applied to a surface of the formed inner granule powder layer to form the outer granule powder layer having a thickness of about 60 µm and then roll the outer granule powder layer.

Subsequently, a sulfide-based electrolyte (Li₂S-P₂S₅) was impregnated in the formed inner granule powder layer and outer granule powder layer in an amount of about 30 parts by weight based on 100 parts by weight of the total granule powder, and dried and rolled to prepare the cathode for an all-solid-state battery.

### [Comparative Example 1] Preparation of cathode for all-solid-state battery

A cathode for an all-solid-state battery was prepared in the same manner as in Example 1 above, except that the outer granule powder layer was not formed on the surface of the inner granule powder layer.

### [Comparative Example 2] Preparation of cathode for all-solid-state battery

A cathode for an all-solid-state battery was prepared in the same manner as in Example 1 above, except that the composition of the inner granule powder layer was replaced with the composition of the outer granule powder layer and the outer granule powder layer was not formed.

### [Comparative Example 3] Preparation of cathode for all-solid-state battery

A cathode for an all-solid-state battery was prepared in the same manner as in Example 1 above, except that the composition of the inner granule powder layer and the composition of the outer granule powder layer were exchanged.

### [Experimental Example 1] Observation of cathode surface through a scanning electron microscope

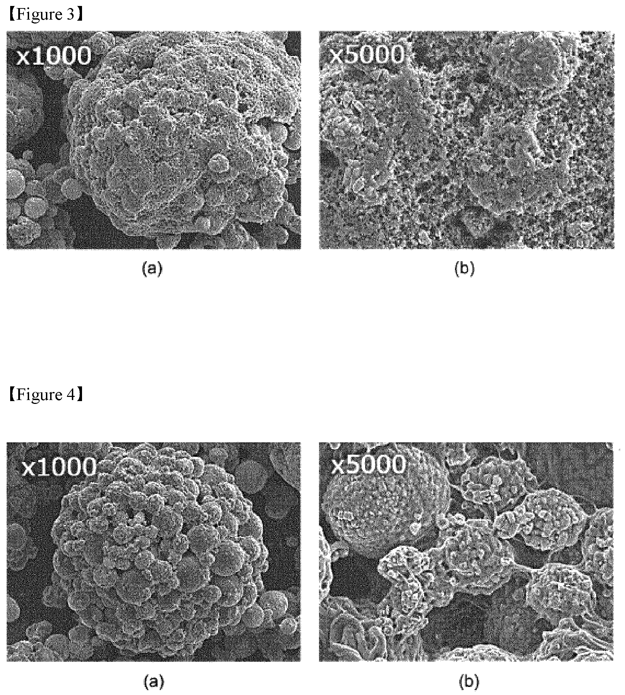

For the cathode for an all-solid-state battery of Comparative Example 2 using the point-shaped carbon black as the conductive material and the cathode for an all-solid-state battery of Comparative Example 1 using the linear single-walled carbon nanotube as the conductive material, respectively, the surface was observed using a scanning electron microscope (SEM). FIG. 3 is an image of a surface of granule powder including a point-shaped conductive material observed with a scanning electron microscope, in which FIG. 3A is an image observed at 1,000 magnifications, and in FIG. 3B is an image observed at 5,000 magnifications. In addition, FIG. 4 is an image of a surface of granule powder including a linear conductive material observed with a scanning electron microscope, in which FIG. 4A is an image observed at 1,000 magnifications, and FIG. 4B is an image observed at 5,000 magnifications.

Referring to FIGS. 3 and 4 together, it could be confirmed that the surface of the granule powder including the linear conductive material (single-walled carbon nanotube) was non-uniform and had a high degree of roughness (FIG. 4), while the surface of the granule powder including the point-shaped conductive material (carbon black) was formed relatively smoothly compared to the surface of the granule powder including the linear conductive material (single-walled carbon nanotube).

Accordingly, the present applicant applies the linear conductive material to the inner granule powder layer as in Example 1 above, and stacks the outer granule powder layer to which the point-shaped conductive material is applied on the inner granule powder layer. That is, this is because with this configuration, the granule powders of the outer granule powder layer including the point-shaped conductive material are not only impregnated in the gap between the granule powders of the inner granule powder layer including the linear conductive material, but also the granule powders including the point-shaped conductive material are additionally uniformly located thereon to flatten the surface of the cathode. As a result, the cathode with the uniform surface can be formed, so it is possible to dramatically improve the adhesion with the solid electrolyte that comes into contact with the electrode.

## Claims

1. A cathode for an all-solid-state battery, comprising:
a metal current collector;
an inner granule powder layer that is located on one surface of the metal current collector and includes an active material, a conductive material, and a binder in a form of granule powder; and
an outer granule powder layer that is stacked on a surface of the inner granule powder layer and includes the active material, the conductive material, and the binder in the form of the granule powder,
wherein the conductive material included in the inner granule powder layer and the conductive material included in the outer granule powder layer have different shapes from each other.

2. The cathode for an all-solid-state battery of claim 1, wherein the conductive material included in the inner granule powder layer and the conductive material included in the outer granule powder layer have different shapes and types from each other.

3. The cathode for an all-solid-state battery of claim 1, wherein the conductive material included in the inner granule powder layer comprises linear particles, and the conductive material included in the outer granule powder layer comprises point-shaped particles.

4. The cathode for an all-solid-state battery of claim 3, wherein the conductive material included in the inner granule powder layer is a carbon nanotube made of the linear particles, and the conductive material included in the outer granule powder layer is carbon black made of the point-shaped particles.

5. The cathode for an all-solid-state battery of claim 4, wherein the conductive material included in the inner granule powder layer is a single-walled carbon nanotube made of linear particles.

6. The cathode for an all-solid-state battery of claim 1, wherein a thickness ratio of the inner granule powder layer and the outer granule powder layer is 4: 1 to 8: 1, a thickness of the inner granule powder layer is a thickness of a part where a thickness from a contact point with the current collector to a contact point with the outer granule powder layer is thickest, and
a thickness of the outer granule powder layer is a thickness of a part where a thickness from a surface of the cathode to a contact point with the inner granule powder layer is thinnest.

7. The cathode for an all-solid-state battery of claim 1, wherein the active material included in the inner granule powder layer and the active material included in the outer granule powder layer are selected independently of each other from the group consisting of LiCoOz, LiNiOz, LiMnOz, Li₂MnO₃, LiMn₂O₄, Li(NiₐCo_{b}Mn_{c})O₂ (0<a<1, 0<b<1, 0<c<1, a+b+c=1), LiNi_{1-yC}o_{y}O₂(O<y<1), LiCo_{1-y}Mn_{y}O₂, LiNi_{1-y}Mn_{y}O₂ (O<y<1), Li(NiₐCo_{b}Mn_{c})O₄ (0<a<2, 0<b<2, 0<c<2, a+b+c=2), LiMn_{2-z}Ni_{z}O₄ (0<z<2), LiMn_{2-z}Co_{z}O₄ (0<z<2), and combinations thereof.

8. The cathode for an all-solid-state battery of claim 1, wherein the binder included in the inner granule powder layer and the binder included in the outer granule powder layer are selected independently of each other from the group consisting of polyvinylidene fluoride (PVDF), vinylidenefluoride-hexafluoropropylene copolymer (PVDF-co-HFP), polyvinyl alcohol, starch, hydroxypropyl cellulose, regenerated cellulose, polyvinylpyrrolidone, polyimide, polyamideimide, polyethylene, polypropylene, ethylene-propylene-diene monomer (EPDM), sulfonated EPDM, styrene butyrene rubber, and fluorine rubber.

9. The cathode for an all-solid-state battery of claim 3, wherein the granule powders of the outer granule powder layer including the point-shaped conductive material are impregnated in a gap between the granule powders of the inner granule powder layer including the linear conductive material, and the granule powders of the outer granule powder layer including the point-shaped conductive material are uniformly located thereon to flatten a surface of the cathode.

10. The cathode for an all-solid-state battery of claim 1, further comprising:
a solid electrolyte that is coated and located on the surfaces of the granule powder included in the inner granule powder layer and the granule powder included in the outer granule powder layer; and a solid electrolyte that is impregnated and located in the gap between the granule powders.

11. The cathode for an all-solid-state battery of claim 10, wherein the solid electrolyte is a sulfide-based solid electrolyte.

12. A method of preparing a cathode for an all-solid-state battery, comprising:
forming an inner granule powder layer in a form of a sheet by preparing an inner granule powder including an active material, a linear conductive material, and a binder in a form of granule powder, applying the prepared inner granule power on a cathode metal current collector, and then rolling the cathode metal current collector and the inner granule powder applied thereon; and
forming an outer granule powder layer in the form of the sheet by preparing an outer granule powder including the active material, a point-shaped conductive material, and the binder in the form of the granule powder, applying the outer granule powder to the surface of the prepared inner granule powder layer, and then rolling the resultant thereof,
wherein the conductive material included in the inner granule powder layer and the conductive material included in the outer granule powder layer have different shapes from each other.

13. The method of preparing a cathode for an all-solid-state battery of claim 12, further comprising:
injecting and drying a sulfide-based electrolyte into the inner granule powder layer, the outer granule powder layer, and between the inner granule powder layer and the outer granule powder layer.

14. An all-solid-state battery, comprising:
the cathode for an all-solid-state battery of claim 1;
an anode; and
a solid electrolyte.

15. The all-solid-state battery of claim 14, wherein the solid electrolyte is located between a surface of the granule powder included in the cathode for the all-solid-state battery and the granule powder, respectively, and is also located as a layered film between the cathode and the anode.
